# EUROPÄISCHE PATENTSCHRIFT

(11) **EP 0 295 470 B1**
(45) Veröffentlichungstag und Bekanntmachung des Hinweises auf die Patenterteilung: **23.03.1994**
(21) Anmeldenummer: 88108430.5
(22) Anmeldetag: 26.05.1988
(51) Int. Cl.: H04M 3/54, H04M 9/00, H04Q 3/545, H04M 3/46

(54) **Verfahren für eine rechnergesteuerte Vermittlungseinrichtung, insbesondere für eine sogenannte KEY-Fernsprechvermittlungseinrichtung mit der Möglichkeit der Rufweiterleitung**
Method for a calculator controlled switching device especially for a so called key telephone exchange with the possibility of call transfer
Méthode pour un dispositif de commutation commandé par calculateur, en particulier pour un central téléphonique à touches avec la possibilité de transfert d'appel

(30) Priorität: 16.06.1987 DE 3720187
(43) Veröffentlichungstag der Anmeldung: 21.12.1988
(73) Patentinhaber: SIEMENS AKTIENGESELLSCHAFT, 80333 München (DE)
(72) Erfinder: Roth, Roland, Dipl.-Inform., D-4650 Gelsenkirchen (DE)

(56) Entgegenhaltungen:
- WO-A-79/00250
- WO-A-83/03510
- PATENT ABSTRACTS OF JAPAN, Band 10, Nr. 217 (E-423)[2273], 29. Juli 1986 & JP-A-61 54 752
- SYSTEMS TECHNOLOGY, Nr. 28, April 1978, Seiten 7-13; J.C.H. DAVIS: "The K1 PABX"

## Beschreibung

Die Erfindung betrifft ein Verfahren für eine rechnergesteuerte Vermittlungseinrichtung, insbesondere für eine sogenannte KEY-Fernsprechvermittlungseinrichtung, mit einem Programmspeicher und einem u.a. anlagenspezifische Informationen und die jeweiligen Betriebszustande der einzelnen Teilnehmerendeinrichtungen sowie der Verbindungsleitungen enthaltenden Arbeitsspeicherbereich und einer Koppeleinrichtung, über die - beeinflußt durch die Steuerrechnereinheit - die einzelnen Teilnehmerendeinrichtungen jeweils untereinander oder mit einer weiterführenden Leitung verbindbar sind und bei der, sofern nach Anlegen einer vorgegebenen Anzahl von Rufzyklen für die angeforderte Teilnehmerendeinrichtung keine Gesprächsverbindung zustandekommt, im Rahmen der vorgesehenen Rufweiterleitung zunächst innerhalb einer Gruppe von vorab ausgewählten Teilnehmerendeinrichtungen das Rufsignal an jede dieser gruppenindividuellen Teilnehmerendeinrichtungen angelegt wird.

In einer modern konzipierten Vermittlungseinrichtung ermöglicht der Einsatz einer Steuerrechnereinheit, die mit einem entsprechenden Speichersystem zusammenarbeitet, eine Reihe von Leistungsmerkmalen. Die für eine Teilnehmerstelle vorgesehenen einzelnen Leistungsmerkmale oder die grundsätzlich systemspezifischen Leistungsmerkmale sind im sogenannten Kundendatenspeicher abgelegt. Solche Leistungsmerkmale können über eine für derartige Aufgaben vorbestimmte Teilnehmerendeinrichtung oder über ein sogenanntes Betriebsterminal eingerichtet, geändert oder rückgängig gemacht werden.

Als systemspezifisches Leistungsmerkmal, das also nicht von einer bestimmten Art einer Endeinrichtung abhängig ist, kann die sogenannte Rufweiterleitung vorgesehen sein. Es wird damit erreicht, daß ein zu einer bestimmten Endeinrichtung abgesetzter Ruf bzw. die entsprechende Anrufsignalisierung zu einer vorab festgelegten anderen Teilnehmerendeinrichtung weitergeleitet wird, wenn sich der ursprünglich gewünschte Teilnehmer innerhalb einer gewissen Zeit oder nach einer bestimmten Anzahl von Rufzyklen nicht meldet. Um sicherzustellen, daß ein Verbindungswunsch, insbesondere ein über eine externe Leitung ankommender Verbindungswunsch mit großer Wahrscheinlichkeit zu einer Gesprächsverbindung führt, ist es durch die Anmeldung WO 83/03510 bekannt, einen nicht angenommenen Ruf innerhalb einer Gruppe von vorbestimmten Teilnehmern weiterzuleiten. Es ist die Aufgabe der Erfindung, die Wahrscheinlichkeit für die Erreichbarkeit eines Teilnehmers noch zusätzlich zu erhöhen.

Dies wird bei dem eingangs genannten Verfahren dadurch erreicht, daß nach erfolglosen Verbindungsversuchen mit den einer solchen Gruppe zugehörigen Teilnehmerendeinrichtungen daran anschließend das Rufsignal in gleicher Weise an die Gesamtheit aller weiteren Teilnehmerendeinrichtungen mit Ausnahme einer oder mehrerer in einem Speicher abgelegten bestimmten Teilnehmerendeinrichtungen in einer vorgegebenen Reihenfolge angelegt wird.

Ausgehend vom Prinzip der Rufweiterschaltung erfolgt diese also nicht nur innerhalb einer bestimmten Gruppe von beispielsweise sachbezogen ausgewählten Teilnehmern, sondern es wird beim erfolglosen Rufen innerhalb dieser Gruppe die Anzahl der für diesen Ruf in Betracht kommenden Teilnehmer noch zusätzlich erweitert. Es erfolgt dann nämlich der Übergang zu einer weiteren, die Gesamtheit der restlichen Teilnehmer oder eine bestimmte Anzahl weiterer Teilnehmer umfassenden Gruppe. Bei der Suche nach der ersten freien Teilnehmerendeinrichtung während dieses nachfolgenden Systemsuchlaufes, bei dem also beginnend mit der niedrigsten Teilnehmerrufnummer die einzelnen Endeinrichtungen in aufsteigender Reihenfolge nacheinander gerufen werden können, werden ganz bestimmte Teilnehmer übergangen. Dies kann beispielsweise die als "Chefteilnehmer" im Kundendatenspeicher programmierte Endeinrichtung sein. Es können aber auch automatisch durch die Steuerung Teilnehmer übersprungen werden, die aktuell als nicht erreichbar abgespeichert sind. Aktuell nicht erreichbar ist beispielsweise eine Endeinrichtung, von der bereits Rufumleitung aktiviert wurde. Eine deartige Endeinrichtung wird also dann automatisch bei der Suche nach einem erreichbaren Teilnehmer nicht berücksichtigt.

Gemäß einer Weiterbildung der Erfindung wird die vorgesehene Art dieser Rufweiterschaltung lediglich bei externen ankommenden Verbindungswünschen ausgeführt. Für solche Anrufe, insbesondere bei über eine Amtsleitung ankommenden Anrufen, ist es nämlich von besonderer Bedeutung, daß ein Gesprächspartner erreicht wird. Es kann, um eine gleichmäßige Auslastung der einzelnen Teilnehmer zu erreichen, für jede Amtsleitung eine ihr individuell zugeordnete Gruppe von Teilnehmerendeinrichtungen vorgesehen sein, innerhalb der jeweils die Rufweiterschaltung erfolgt.

Weitere vorteilhafte Ausgestaltungen der Erfindung sind den restlichen Unteransprüchen zu entnehmen.

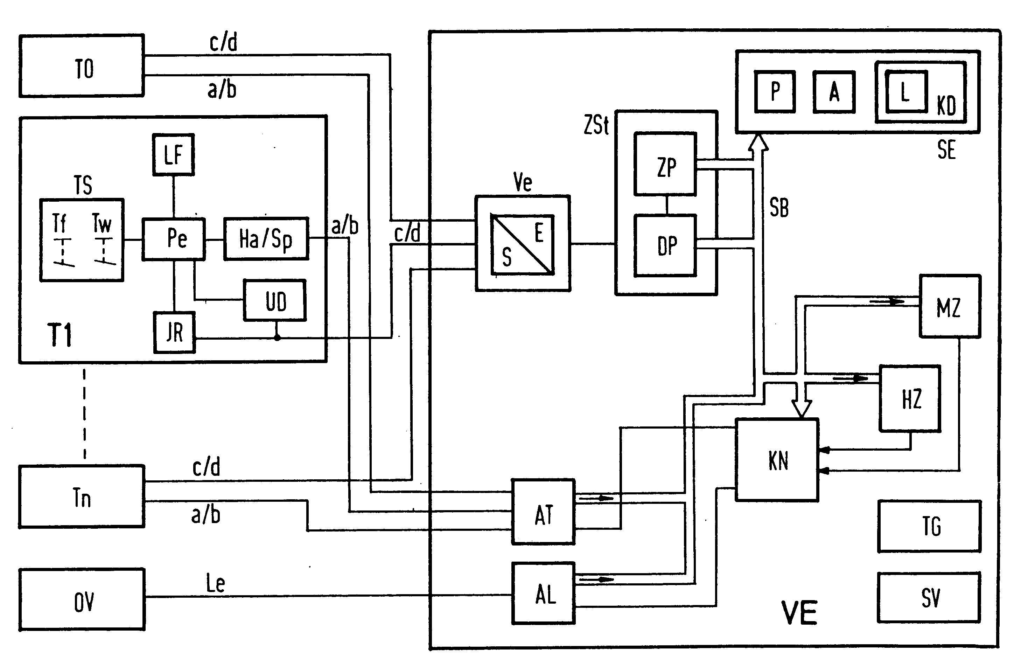

Das erfindungsgemäße Verfahren wird nachstehend anhand einer Figur erläutert. Die Figur zeigt im Blockschaltbild einige Funktionseinheiten einer Vermittlungseinrichtung VE, an die Teilnehmerendeinrichtungen T0...Tn sternförmig angeschlossen sind. Die Sprachübertragung soll im Ausführungsbeispiel auf analoge Weise erfolgen. Für den Anschluß der Endeinrichtungen wird eine vieradrige Anschlußleitung verwendet, die aus einem Sprechadernpaar a/b und einem Signalisierungsadernpaar c/d besteht. Bei einem ausschließlich digitalen Vermittlungssystem wären die Steuerverbindung und die für die Übertragung der Sprachinformationen vorgesehenen Nutzverbindung auf einer zweiadrigen Anschlußleitung realisierbar, wobei dann mindestens ein Nutzkanal und ein Steuerkanal für jede Endeinrichtung durch eine bestimmte Zeitlage realisiert werden könnte. Zur im wesentlichen prozeduralen Anpassung werden die Teilnehmerendeinrichtungen TO - Tn über eine Anschalteeinheit AT, die auch die Rufanschaltung beinhaltet mit der elektronischen Koppeleinrichtung KN verbunden. Für die zu einer öffenlichen Vermittlungsstelle oder zu einem privaten Netz führenden Leitungen L erfolgt dies über die Anschalteeinheit AL. Die Steuerungsaufgaben des Systems übernimmt die zentrale Steuerrechnereinheit ZSt, die über einen Systembus SB mit einer Speichereinheit SE, den genannten Anschalteeinheiten AT bzw. AL und den weiteren Systemkomponenten, wie beispielsweise der Koppeleinrichtung KN, einer für die Bildung der Mehrfrequenzcode-Zeichen dienenden Einheit MZ und einer für die Erzeugung der Hörtöne zuständigen Einheit HZ gekoppelt ist. Die Aufgaben der zentralen Steuerung ZSt sind im Ausführungsbeispiel auf zwei Prozessoren verteilt. Der Prozessor ZP soll beispielsweise der vermittlungstechnischen Steuerung dienen und durch den Prozessor DP soll unter Einschaltung der ein Sendeteil S und ein Empfangsteil E enthaltenden Verarbeitungseinheit Ve die Signalisierungsbearbeitung erfolgen. Eine solche Verarbeitungseinheit Ve ist jedem Signalisierungsadernpaar c/d zugeordnet.

Über diese Signaladern c/d wird eine wechselseitige Informationsübertragung zwischen einer Endeinrichtung und der zentralen Steuerung vorgenommen. Wie dies für die Endeinrichtung Tl, die einzelne Funktionskomponenten zeigt, angedeutet ist können im Tastensatz Ts neben den Zifferntasten Tw der Wähltastatur weitere Funktionstasten Tf vorhanden sein. Die Informationsübertragung von der Steuerrechnereinheit ZSt der Vermittlungseinrichtung zu den einzelnen Endeinrichtungen TO - Tn kann beispielsweise Einstellinformationen für optische Anzeigeelemente LF betreffen. Durch derartige optischen Anzeigeelemente z.B. in Form von Leuchtdioden wird dann bei sogenannten KEY-Vermittlungsanlagen u.a. der Zustand der vorhandenen externen Leitungen Le und der Belegungszustand der einzelnen Teilnehmerendeinrichtungen angezeigt. Dies erfolgt unter Mitwirkung der in einer jeden Endeinrichtung z.B. in der Endeinrichtung Tl vorhandenen Steuereinheit Pe. Im Ausführungsbeispiel sollen die von der Vermittlungseinrichtung VE zu einer Endeinrichtung über die Signalisierungsadern c/d übertragenen Informationen durch eine binäre Spannungsmodulation und die in der Gegenrichtung zu übertragenden Informationen durch eine binäre Strommodulation übermittelt werden. Mit letzterer wird dann beispielsweise die an der jeweiligen Endeinrichtung vorgenommene Betätigung einzelner Tasten signalisiert. Dies soll beispielsweise in Verbindung mit der Steuereinheit PE durch die Einheit IR erfolgen. Die in der Gegenrichtung aufgrund der vorgesehenen Spannunsmodulation an den jeweiligen c/d Signalisierungsadern auftretenden Informationsbits werden im Zusammenwirken mit der Steuereinheit Pe durch die Einheit UD registriert. Sie führen dann zur Ansteuerung der durch die Einheit LF angedeuteten Anzeigeelemente. Diese können durch Leuchtdioden realisiert werden. Zusätzlich oder anstelle dieser Leuchtdioden könnte auch eine entsprechende Darstellung auf einem Display erfolgen.

Über das jeweilige a/b-Adernpaar werden die Sprachinformationen übertragen. Mit diesen Sprechadern ist die Sprechschaltung Sp verbunden. Sie dient im Zusammenhang mit dem Handapperat HA der Verarbeitung der im Ausführungsbeispiel auf analoge Weise übertragenen Sprachinformationen und bildet den Leitungsabschluß.

Die Prozessoren ZP und DP haben über den Systembus SB Zugriff zu den in der Speichereinrichtung SE abgelegten Daten. Diese betreffen u.a. das in dem Speicher P abgelegte gesamte Systemprogramm und die zu ihm gehörigen und im Arbeitsspeicher A enthaltenen betriebstechnischen Daten. In dem Speicherteil KD sind die Kundendaten abgelegt, zu denen beispielsweise die für die Anlage vorgesehenen Kurzrufnummern und die den Teilnehmerendeinrichtungen zugeteilten Berechtigungen gehören. Das Konfigurieren dieser Daten kann z.B. über die Eingabetastatur einer als Betriebsterminal festlegbaren Endeinrichtung erfolgen. Für den Kundendatenspeicher KD ist ein Speichermedium gewählt, bei dem die dort abgelegten Daten nach dem Ausschalten der Anlage oder bei Spannungsausfall erhalten bleiben. Hierzu gehört eine abgespeicherte Liste L, die die im Zusammenhang mit der programmierten Rufweiterschaltungsart entstehenden Daten enthält. Durch das Leistungsmerkmal der Rufweiterschaltung bietet das Vermittlungssystem die Möglichkeit, in den Fällen, in denen bei einem anstehenden Ruf die gewünschte Gesprächsverbindung nicht angenommen wird selbsttätig mindestens eine weitere Teilnehmerendeinrichtung zu rufen. Insbesondere bei kleineren Vermittlungsanlagen ist eine derartige Rufweiterleitung normalerweise nur für Anrufe vorgesehen die auf einer externen Leitung Le ankommen. Sie kann auf Anrufe beschränkt sein, die über eine Amtsleitung Le von einem öffentlichen Vermittlungssystem OV zu der Vermittlungseinrichtung VE gelangen. Ist bei einem Verbindungsversuch die gewünschte Teilnehmerendeinrichtung belegt oder meldet sich der betreffende Teilnehmer nicht so erfolgt nach einer bestimmten Zeit oder nach einer bestimmten Anzahl von Rufzyklen die Rufweiterleitung zu einer anderen Teilnehmerendeinrichtung. Es können hierfür auch mehr als eine weitere Endeinrichtung vorgesehen werden, die dann eine Gruppe von im Rahmen der Rufweiterleitung erreichbaren Endeinrichtungen darstellen. Es können auch mehrere solcher Gruppen festgelegt sein. Die zu einer Gruppe gehörenden Endeinrichtungen sind in der Liste L im Kundendatenspeicher KD abgespeichert. Der eine Rufweiterleitung auslösende Anruf wird innerhalb der vorbestimmten Gruppe von Teilnehmerendeinrichtungen nacheinander solange zu den einzelnen Teilnehmerendeinrichtungen weitergeleitet bis eine Gesprächsverbindung zustande kommt. Ist eine solche Gesprächsverbindung nicht möglich, so kann falls dies für die Anlage vorgesehen ist die Rufweiterleitung zu einer weiteren Gruppe von Teilnehmerendeinrichtungen erfolgen. Es ist möglich für jede Amtsleitung Le für diese Art der Rufweiterleitung jeweils eine oder mehrere Gruppen zu bilden. Führt diese Anrufsignalisierung zu den im Rahmen der Rufweiterleitung zunächst unmittelbar hierfür vorgesehenen Endeinrichtungen nicht zu einem Verbindungserfolg so kann zu einem allgemeinen Systemsuchlauf übergegangen werden. Bei einem solchen Systemsuchlauf können dann alle übrigen Teilnehmerendeinrichtungen nacheinander in diese weitergeleitete Anrufsignalisierungsmethode einbezogen werden. Ist also eine Gesprächsverbindung mit einer der ursprünglich für die Rufweiterleitung vorbestimmten Teilnehmerendeinrichtungen nicht möglich so erfolgt die Rufweiterleitung beginnend mit der niedrigsten Teilnehmernummer zu jeweils nächsten im Arbeitsspeicher A als frei gekennzeichnete Station. Eine ursprünglich für die Rufweiterleitung vorgesehene Gruppe kann sich im Grenzfall auf eine einzige weitere Teilnehmerendeinrichtung reduzieren. Bei dem sich anschließenden Systemsuchlauf kann grundsätzlich auch eine belegte Teilnehmerendeinrichtung durch eine entsprechende Rufeinblendung dazu aufgefordert werden das anstehende Gespräch zu übernehmen. Führt bei diesem Systemsuchlauf die jeweils vorgenommene Anrufsignalisierung nicht zum Melden des Teilnehmers so erfolgt dann die Rufweiterleitung zur nächsten, vorzugsweise zur nächsten freien Station. Bei der Suche nach der ersten freien Station während des Systemsuchlaufes können bestimmte Teilnehmer übersprungen werden. Diese Teilnehmer sind im Arbeitsspeicher enthalten, so daß zunächst vor der betreffenden Anrufsignalisierung festgestellt wird ob es sich jeweils um einen beim Suchlauf zu überspringenden Teilnehmer handelt. Es kann beispielsweise ein als "Chefteilnehmer" deklarierter Teilnehmer bei dem Systemsuchlauf ausgeklammert werden. Eine Station, bei der ein Leistungsmerkmal aktiviert wurde durch das erkennbar wird, daß der betreffende Teilnehmer nicht erreichbar ist wird ebenfalls übersprungen. Dies ist beispielsweise der Fall, wenn bei der betreffenden Teilnehmerendeinrichtung die Rufumleitung aktiviert wurde. Dies kann durch Abfragen des Arbeitsspeichers A festgestellt werden, in dem diejenigen Teilnehmer, die einfach ein solches Leistungsmerkmal angefordert haben abgespeichert sind.

## Patentansprüche

1. Verfahren für eine rechnergesteuerte Vermittlungseinrichtung, insbesondere für eine sogenannte KEY-Fernsprechvermittlungseinrichtung (VE), mit einem Programmspeicher (P) und einem u.a. anlagenspezifische Informationen und die jeweiligen Betriebszustände der einzelnen Teilnehmerendeinrichtungen sowie der Verbindungsleitungen enthaltenden Arbeitsspeicherbereich (A) und einer Koppeleinrichtung (KN), über die - beeinflußt durch die Steuerrechnereinheit (ZSt) - die einzelnen Teilnehmerendeinrichtungen (TO...Tn) jeweils untereinander oder mit einer weiterführenden Leitung (Le) verbindbar sind und bei der, sofern nach dem Anliegen einer vorgegebenen Anzahl von Rufzyklen für die angeforderte Teilnehmerendeinrichtung (T1) keine Gesprächsverbindung zustandekommt, im Rahmen der vorgesehenen Rufweiterleitung zunächst innerhalb einer Gruppe von vorab ausgewählten Teilnehmerendeinrichtungen das Rufsignal an jede dieser gruppenindividuellen Teilnehmerendeinrichtungen angelegt wird,
**dadurch gekennzeichnet,**
daß nach erfolglosen Verbindungsversuchen mit den einer solchen Gruppe zugehörigen Teilnehmerendeinrichtungen daran anschließend das Rufsignal in gleicher Weise an die Gesamtheit aller weiteren Teilnehmerendeinrichtungen mit Ausnahme einer oder mehrerer in einem Speicher abgelegten bestimmten Teilnehmerendeinrichtungen in einer vorgegebenen Reihenfolge angelegt wird.

2. Verfahren nach Anspruch 1,
**dadurch gekennzeichnet,** daß die vorgesehene Art der Rufweiterschaltung lediglich bei einer über eine weiterführende Verbindungsleitung, insbesondere Amtsleitung (Le) ankommende Verbindungswünsche ausgeführt wird.

3. Verfahren nach Anspruch 1 oder 2,
**dadurch gekennzeichnet,** daß jeweils für jede Amtsleitung eine ihr individuell zugeordnete Gruppe von Teilnehmerendeinrichtungen vorgesehen ist.

4. Verfahren nach Anspruch 3,
**dadurch gekennzeichnet,** daß nach den erfolglosen Verbindungsversuchen innerhalb einer Gruppe von Teilnehmerendeinrichtungen das Rufsignal beginnend mit der niedrigsten Teilnehmernummer in aufsteigender Teilnehmernummernfolge nacheinander bis zum Zustandekommen einer Gesprächsverbindung an die im Arbeitsspeicher (A) jeweils als frei gekennzeichneten Teilnehmerendeinrichtungen angelegt wird.

5. Verfahren nach Anspruch 3,
**dadurch gekennzeichnet,** daß nach erfolglosen Verbindungsversuchen innerhalb einer Gruppe von Teilnehmerendeinrichtungen das Rufsignal für die gegebenenfalls jeweils in den anderen Gruppen zusammengefaßten Teilnehmerendeinrichtungen und anschließend für die übrigen Teilnehmerendeinrichtungen angelegt wird.

6. Verfahren nach Anspruch 1,
**dadurch gekennzeichnet,** daß die zu einer nacheinander erfolgenden Ansteuerung der Gesamtheit der Teilnehmerendeinrichtungen notwendigen Steuerinformationen aus den im Kundendatenspeicher (KD) abgelegten Informationen durch die zentrale Steuerrechnereinheit (ZSt) ausgelesen werden, daß im Kundendatenspeicher (KD) die bei der vorzunehmenden Rufweiterleitung davon auszuschließenden Teilnehmerendeinrichtungen durch ein zusätzliches Merkkennzeichen festgelegt ist.

## Claims

1. Method for a computer-controlled switching system, particularly for a so-called key telephone switching system (VE), comprising a program memory (P) and a main memory area (A) containing, inter alia, system-specific information and the respective operating states of the individual subscriber terminals and of the connecting lines, and a switching network (KN) via which the individual subscriber terminals (T0...Tn) can be connected to one another or to an ongoing line (Le) in each case under the influence of the central processor (ZSt), and in which, if no call connection is established after the presence of a predetermined number of call cycles for the requested subscriber terminal (T1), the ringing signal is applied, initially within a group of preselected subscriber terminals, to each of these group-individual subscriber terminals in connection with the intended call forwarding, characterized in that after unsuccessful call attempts with the subscriber terminals belonging to such groups, the ringing signal is in the same way subsequently applied in a predetermined order to the totality of all other subscriber terminals with the exception of one or more particular subscriber terminals stored in a memory.

2. Method according to Claim 1, characterized in that the intended type of call forwarding is only carried out in case of a call request coming in via an ongoing connecting line, particularly exchange line (Le).

3. Method according to Claim 1 or 2, characterized in that in each case for each exchange line, a group of subscriber terminals individually allocated to it is provided.

4. Method according to Claim 3, characterized in that after the unsuccessful call attempts within a group of subscriber terminals, the ringing signal is in each case applied to the subscriber terminals in each case identified as idle in the main memory (A), successively in ascending subscriber number order beginning with the lowest subscriber number until a call connection is established.

5. Method according to Claim 3, characterized in that after unsuccessful call attempts within a group of subscriber terminals, the ringing signal is applied for the subscriber terminals which may be combined in the other groups in each case and subsequently for the remaining subscriber terminals.

6. Method according to Claim 1, characterized in that the control information necessary for a successive selection of the totality of subscriber terminals is read out of the information stored in the customer data memory (KD) by the central processor (ZSt), and that the subscriber terminals which are to be excluded from the call forwarding to be undertaken are specified by an additional identification code in the customer data memory (KD).

## Revendications

1. Procédé pour un dispositif de commutation assisté par ordinateur, notamment pour ce que l'on appelle un dispositif (VE) de commutation de télécommunications-KEY, comportant une mémoire de programme (P), une zone de mémoire de travail (A) comportant, entre autres, des informations spécifiques aux installations et des états de fonctionnement de chacun des terminaux d'abonnés ainsi que des lignes de connexion, et un dispositif de couplage (KN), par l'intermédiaire duquel - influencé par l'unité formant ordinateur de commande (ZSt) - les terminaux d'abonnés individuels (T0...Tn) peuvent être reliés entre eux ou à une ligne de transmission (Le), et dans lequel, en supposant qu'après l'application d'un nombre déterminé de cycles d'appels pour le terminal d'abonné (T1) sollicité, aucune liaison de conversation ne soit présente, le signal d'appel est appliqué, dans le cadre de la transmission d'appels prédéterminée, en premier lieu à l'intérieur d'un groupe de terminaux d'abonnés choisis préalablement, à chacun de ces terminaux d'abonnés individuels du point de vue du groupe,
caractérisé en ce
qu'après des essais de liaison sans succès avec les terminaux d'abonnés associés à un groupe de ce genre, on procède ensuite à l'application du signal d'appel dans une séquence prédéterminée, de la même manière, à l'ensemble de tous les autres terminaux d'abonnés, à l'exception d'un ou de plusieurs terminaux d'abonnés déterminé et extrait d'une mémoire.

2. Procédé suivant la revendication 1,
caractérisé en ce que l'on effectue le type prévu de transmission d'appels uniquement lors de souhaits de liaisons d'entrée par l'intermédiaire d'une ligne de connexion de transmission, notamment une ligne publique (Le).

3. Procédé suivant la revendication 1 ou 2,
caractérisé en ce que l'on prévoit, pour chaque ligne réseau, un groupe de terminaux d'abonnés associé individuellement à cette dernière.

4. Procédé suivant la revendication 3,
caractérisé en ce qu'après les essais de liaison sans succès à l'intérieur d'un groupe de terminaux d'abonnés, on applique le signal d'appel aux terminaux d'abonnés caractérisés dans la mémoire de travail (A) comme libres, en commençant avec le numéro d'abonné le plus petit dans une séquence de numéros d'abonnés croissante, successivement jusqu'à la présence d'une liaison de conversation.

5. Procédé suivant la revendication 3,
caractérisé en ce qu'après des essais de liaison sans succès à l'intérieur d'un groupe de terminaux d'abonnés, on applique le signal d'appel pour les terminaux d'abonnés éventuellement regroupés dans les autres groupes, et ensuite, pour les autres terminaux d'abonnés.

6. Procédé suivant la revendication 1,
caractérisé en ce que l'on extrait les informations de commande nécessaires à une commande successive de l'ensemble des terminaux d'abonnés, à partir des informations mémorisées dans la mémoire de données de l'utilisateur (KD), par l'intermédiaire de l'unité centrale formant ordinateur de commande (ZSt), et que, dans la mémoire de données de l'utilisateur (KD), on détermine, par une marque caractéristique supplémentaire, les terminaux d'abonnés qui sont à débrancher lors de la transmission d'appels à exécuter.
